(19) Europäisches Patentamt
European Patent Office
Office européen des brevets

(11) **EP 2 023 025 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(51) Int Cl.:
*F16K 31/126* (2006.01)    *B29B 7/76* (2006.01)
*B29B 7/80* (2006.01)

(21) Anmeldenummer: **08013219.4**

(22) Anmeldetag: **23.07.2008**

(54) **Konstantdruckdüse und Verfahren zum Vermischen mit derselben**

Constant pressure nozzle and method for mixing with same

Buse de pression constante et procédé de mélange avec celle-ci

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.08.2007 DE 102007037780**

(43) Veröffentlichungstag der Anmeldung:
**11.02.2009 Patentblatt 2009/07**

(73) Patentinhaber: **Hennecke GmbH**
**53757 Sankt Augustin (DE)**

(72) Erfinder:
• **Schamberg, Martin**
**53757 Sankt Augustin (DE)**
• **Etschenberg, Lars**
**53721 Siegburg (DE)**
• **Geuer, Jens**
**53757 Sankt Augustin (DE)**
• **Wirth, Jürgen**
**51147 Köln (DE)**

(74) Vertreter: **Gosdin, Michael**
**Adam-Stegerwald-Strasse 6**
**97422 Schweinfurt (DE)**

(56) Entgegenhaltungen:
WO-A2-01/53056        DE-A1- 2 360 154
DE-A1- 3 431 112      DE-A1- 3 940 866
DE-A1- 10 020 157

**Beschreibung**

Die Erfindung betrifft ein Verfahren zum Vermischen von mindestens zwei Reaktivkomponenten, wobei die mindestens zwei Reaktivkomponenten über Düsen in eine Mischkammer injiziert werden und sich dort miteinander vermischen, dadurch gekennzeichnet, dass mindestens eine der Reaktivkomponenten mittels einer Konstantdruckdüse in die Mischkammer eingedüst wird sowie die Konstantdruckdüsen selbst.

Bei der Polyurethan-Hochdruckvermischung besteht die wesentliche Aufgabe der Düsen darin, Druckenergie in Strömungsenergie umzuwandeln. Da die Vermischung in der Regel in einer mechanisch mittels Stößel gereinigten Mischkammer stattfinden soll, ist im Prinzip vorgegeben, dass die Mischkammer zylindrisch und frei von Einbauten gestaltet sein muss. Somit stellt die Strömungsenergie in Form hoher Impulsenergie die einzige Energieform dar, die zur Vermischung der Reaktivkomponenten zur Verfügung steht.

Deshalb besteht ein wesentliches Kriterium für die Qualität einer Düse darin, möglichst effizient Druckenergie in Strömungsenergie und damit letztendlich bei gegebener Mischkammergeometrie in Mischgüte umzusetzen.

Häufig kommt es vor, dass ein Mischkopf innerhalb kürzester Zeitspannen z.T. sehr verschiedene Rezepturen verarbeiten muss. Dabei können die Mengen der Einzelkomponenten sich erheblich ändern oder aber einzelne Komponenten werden von Schuss zu Schuss zu- bzw. weggeschaltet. Das bedeutet, dass eine Düse auch für einen großen Mengenbereich in der Lage sein muss, möglichst effizient Druckenergie in Strömungsenergie umzuwandeln (z.B. sowohl für 50 cm$^3$/s als auch für 300 cm$^3$/s).

Zu diesem Zweck werden häufig Düsen mit einer verstellbaren Düsennadel (deren Spitze, der sogenannte Düsenzapfen, bevorzugt zylindrisch oder konisch ausgeführt wird) eingesetzt. Dieser Düsenzapfen bildet im Zusammenspiel mit einer konzentrisch zu besagtem Düsenzapfen angeordneten runden Öffnung, welche in die Mischkammer mündet, einen Ringspalt aus, dessen Größe abhängig ist von der axialen Position des Zapfens relativ zu der runden Öffnung. Dadurch lässt sich im Prinzip jede beliebige Geschwindigkeit bzw. jeder beliebige Druck durch Verändern der Zapfenposition erzielen.

Der Druck, den die Düse im Zusammenspiel mit der Dosierpumpe erzeugt, ist nicht nur in der Beziehung wichtig, dass er das Energiereservoir darstellt, aus dem die Strömungsenergie erzeugt wird. Er ist ebenso wichtig in Hinblick auf die Dosiergenauigkeit. Jeder Tropfen, vom ersten bis zum letzten, der die Mischkammer verlässt, sollte gut vermischt sein. Dabei muss auch das Mischungsverhältnis der Reaktivkomponenten, möglichst vom ersten bis zum letzten Tropfen, möglichst genau eingehalten werden. Dabei spielen Effekte wie z.B. Schlauchatmung, Pumpenleckage in Abhängigkeit von der Druckdifferenz, Fahrzeiten der bewegten mechanischen Schaltelemente eine wichtige Rolle. Mit Hinsicht auf diese Effekte ist es vorteilhaft, Düsen einzusetzen, welche selbstregelnd unabhängig vom Mengenstrom bei einem konstanten Druckniveau arbeiten.

Eine wichtige Funktion kommt den Düsen zu, wenn die Mengen von Schuss zu Schuss stark verändert werden, bzw. wenn einzelne Komponenten von Schuss zu Schuss zu- bzw. abgewählt werden sollen. Hierbei ist es, wie bereits erläutert, einerseits wichtig, dass die Düsen auch für sehr unterschiedliche Mengenströme in der Lage sind, möglichst effizient Druckenergie in Strömungsenergie umzuwandeln. Dies lässt sich wesentlich durch die Geometrie der Düse beeinflussen. Außerdem ist es in Hinblick auf die Dosiergenauigkeit sehr vorteilhaft, wenn die Düsen in der Lage sind bei einer Mengenänderung automatisch, also selbstregelnd durch Anpassen des Ringspaltes, das Druckniveau möglichst konstant zu halten. Dies ist prinzipiell möglich, wenn die Düsen als sogenannte Konstantdruckdüsen ausgeführt werden, bei denen die vom Mediendruck auf die Düsennadel ausgeübte Kraft im Gleichgewicht mit einer definierten Gegenkraft steht. Dadurch regelt sich die Düsennadel- und somit auch die Düsenzapfenposition automatisch ein. Die definierte Gegenkraft wird üblicherweise von einem Federsystem ausgeübt, wobei es sich z.B. um eine Druckfeder bzw. ein Federpaket oder um einen Faltenbalg, welcher mit einer unter Druck stehenden Hydraulikflüssigkeit oder pneumatisch mit einem unter Druck stehenden Gas beaufschlagt wird, handeln kann. Geeignet sind auch Kombinationen aus einer Feder und einem Faltenbalg. Denkbar sind aber auch elektromechanische oder piezo-elektrische Antriebe.

Dieses Gleichdruckprinzip ist Stand der Technik und wird z.B. in den Patentschriften DE 2360154 A, DE 3200802 A sowie in DE 10020157 A beschrieben.

In DE 2360154 A wird eine Lösung beschrieben, welche dazu dient, den Mediendruck in den beiden Reaktivkomponenten auf demselben Niveau zu halten. Beide Komponenten werden dazu mit der gleichen Hydraulikleitung verbunden und die Hydraulikflüssigkeit wird von den Medien über eine Membran oder über einen Faltenbalg getrennt. Die Flächen, auf welche der Komponentendruck und die Hydraulikflüssigkeit wirken, sind dabei gleich groß und beide deutlich größer als der Düsenschaft. Dies führt dazu, dass die Membran bzw. der Faltenbalg bei z.B. 200 bar Mediendruck bezogen auf ihre Baugröße sehr hohen Belastungen ausgesetzt sind, welche die Dauerfestigkeit stark herabsetzen, da sie ja auch auf der Hydraulikseite mit diesen 200 bar beaufschlagt werden müssen.

Wesentlich günstiger ist es, eine Durchführung für den beweglichen Düsenschaft vorzusehen, in welcher der mit der Reaktivkomponente gefüllte Raum hydraulisch von dem Raum abgetrennt wird, in dem die Membran bzw. der Faltenbalg sich bewegen. Dies lässt sich z.B. durch geeignete, bevorzugt reibungsarme Dichtungen realisieren, welche das dynamische Verhalten nicht negativ beeinflussen. Insbesondere bei einer Moment-freien und damit auch querkraftarmen Kraftübertragung des Federsystems auf den Düsenzapfen, lässt sich der gefürchtete Slip-Stick-Effekt, welcher sich in einem Hakeln der Düse bemerkbar macht, weitgehend vermeiden.

Dadurch kann die Fläche, auf die der Mediendruck wirkt, kleiner gewählt werden als die Fläche, auf die der Hydraulikdruck wirkt. Folglich kann der steuernde Hydraulikdruck deutlich kleiner sein als der Mediendruck. Dies wiederum verringert die entstehenden mechanischen Spannungen z.B. in dem Faltenbalg ganz erheblich und ermöglicht erst die gewünschte Dauerfestigkeit für dieses Element. Außerdem ist es dadurch möglich, auch Druckluft aus dem normalerweise vorhandenen Druckluftnetz als Steuermedium einzusetzen.

Ein weiterer gravierender Nachteil der in DE 2360154 A dargestellten Lösung ist in der Geometrie der Düsenspitze zu sehen. Es ist sehr ungünstig die Mantelflächen des Düsenplättchens und des Düsenzapfens parallel anzuordnen. Besonders ungünstig wirkt sich dies aus, wenn gleichzeitig der Öffnungswinkel des Düsenplättchens noch sehr klein gewählt wird. Wie später erläutert wird, führt dies bei den zum Teil relativ viskosen Reaktivkomponenten zu hohen Strömungsverlusten. Deshalb wird die maximale Geschwindigkeit, welche bei einem bestimmten Druckniveau erzielbar ist, insbesondere bei Viskositäten über 500 mPas auch bei hohen Mediendrücken sehr gering sein, und der Austragsbereich, bei dem mit dieser Düse noch eine gute Vermischung erzielbar ist, wird ebenfalls sehr eingeschränkt sein.

Auch die in DE 3200802 A dargestellte Lösung wird den vielfältigen Anforderungen an eine Konstantdruckdüse nicht gerecht. Auch hier führt der enge Öffnungswinkel des Düsenplättchens insbesondere bei engen Düsenspalten zu hohen Strömungsverlusten im Einströmbereich, welche die erzielbare Geschwindigkeit bei gegebenem Druckniveau und damit auch den Einsatzbereich der Düse stark herabsetzen. Außerdem ist bei der dargestellten Düse der Gradient $\dfrac{\partial A}{\partial h}$, mit dem sich die kleinste Ringfläche A mit dem Düsenhub h ändert, aufgrund des engen Öffnungswinkels zu klein. Deshalb ist für einen großen Verstellbereich auch ein relativ großer Nadelhub notwendig. Dies führt beim Einsatz von Federn dazu, dass sich der Mediendruck aufgrund der Federkennlinie relativ stark ändert. Dem lässt sich nur dadurch begegnen, dass man längere Federn mit einer flacheren Kennlinie auswählt. Das wiederum ist mit Hinblick auf den benötigten Bauraum unerwünscht.

Beim Einsatz von Faltenbalgen wirkt sich ein relativ großer Verstellweg wiederum sehr negativ auf die Dauerfestigkeit des Faltenbalges aus, insbesondere wenn man im Bauraum beschränkt ist. Sehr nachteilig ist bei dieser Lösung aber insbesondere die Gefahr der Kontaminierung von Medium mit Hydraulikflüssigkeit.

Selbst wenn man davon ausgeht, dass die dargestellte Düse mit Dichtungen versehen ist, so besteht die Gefahr, dass eine Kontamination stattfindet, wenn die Dichtungen nicht rechtzeitig erneuert werden. Bereits geringste Mengen an Hydrauliköl in den Reaktivkomponenten können aber zu schweren Schaumstörungen führen. Anschließend ist ein aufwendiges Spülen der Anlage notwendig. Deshalb stellt die Lösung mit einem Faltenbalg die wesentlich sicherere und wartungsärmere Variante für eine rein hydraulische Lösung dar.

Außerdem stellt natürlich die notwendige Abdichtung des Hydraulikkolbens einen weiteren Widerstand dar. Da die Dichtung einen gewissen Anpressdruck benötigt und die Normalkraft auf den äußeren Zylinder proportional zum Anpressdruck und zur Kontaktfläche ist, entstehen aufgrund des relativ großen Zylinderdurchmessers relativ hohe Reibkräfte zwischen Kolben und Zylinder. Diese können in erheblicher Weise das dynamische Verhalten der Düse beeinflussen.

Ein weiterer Vorschlag für eine Konstantdruckdüse findet sich in DE10020157 A. Nachteilig an dieser Lösung ist jedoch wiederum, dass die Flächen, auf die der Mediendruck und der Hydraulikdruck wirken, gleich groß sind, was wiederum die gleichen negativen Begleiterscheinungen bezüglich der Dauerfestigkeit und der Balgdimensionierung mit sich bringt, wie sie schon weiter oben mit Bezug auf die Veröffentlichung DE2360154 A beschrieben wurden. Besonders kritisch wird die begrenzte Dauerfestigkeit des Balges dadurch, dass ein Versagen des Faltenbalges direkt zu einer Kontaminierung der Reaktivkomponente mit Hydraulikflüssigkeit führt. Wenn jedoch der Raum, in dem sich der Faltenbalg bewegt, gegenüber dem mit dem Dosieraggregat über Leitungen hydraulisch verbundenen Raum hydraulisch abgedichtet ist, so ist hier eine doppelte Sicherung gegeben.

Da es sich bei den Reaktivkomponenten in der Polyurethan-Verarbeitung in der Regel um relativ viskose Materialien handelt, lässt sich mit einem begrenzten zur Verfügung stehenden Druckniveau (z.B. 200 bar) auch nur eine begrenzte Strömungsenergie erzeugen. Grund dafür sind im Wesentlichen die Strömungsverluste im Ein- und Auslauf des engsten Düsenspaltes. Je viskoser die Medien und je enger der Spalt wird, umso höher wird der Reibungsanteil und damit die Dissipationsenergie der Strömung beim Durchströmen der Düse. Diese Energie steht dann nicht mehr in Form von Strömungsenergie zur Verfügung, wodurch sich der Wirkungsgrad der Düse merklich verschlechtert.

Den geringsten Wirkungsgrad (Quotient aus Impulsenegie des aus der Düse austretenden Strahles zu eingesetzter Druckenergie) erreichen Düsen bei viskosen Flüssigkeiten und bei sehr eng eingestellten Ringspalten. Unter diesen Bedingungen sind nämlich die Reibungsverluste besonders groß. Um die Strömungsverluste in der Düse möglichst klein zu halten, ist es besonders bei sehr eng eingestellten Ringspalten vorteilhaft, wenn sich der Strömungsquerschnitt im Einströmbereich in den engsten Ringspalt als auch im Ausströmbereich aus dem engsten Ringspalt auf möglichst kurzem Weg einschnürt bzw. aufweitet.

Deshalb ist es vorteilhaft, wenn die Kontur des Düsenzapfens mit der Kontur des Düsenplättchens im Einströmbereich zum engsten Ringspalt einen Winkel $\alpha$ von mindestens 30°, bevorzugt mindestens 45° und besonders bevorzugt mindestens 60° ausbildet.

Ebenso ist es vorteilhaft, wenn die Kontur des Düsenzapfens mit der Kontur des Düsenplättchens im Ausströmbereich aus dem engsten Ringspalt einen Winkel $\beta$ von mindestens 30°, bevorzugt 45° und besonders bevorzugt 60° ausbildet.

Ansonsten werden die Druckverluste aufgrund von Reibung, die bei einer Spaltströmung proportional zur dritten Potenz der Spaltweite ansteigen, so groß, dass nur noch ein sehr geringer Anteil der eingesetzten Druckenergie in Strömungsenergie umgewandelt werden kann.

Um eine optimale Synchronität der verschiedenen Reaktivkomponenten bei Schussbeginn und Schussende zu gewährleisten, werden heute in der Regel sogenannte Nutenschiebermischköpfe eingesetzt. Dabei gibt ein sogenannter Steuerstößel die Mischkammer für alle Komponenten gleichzeitig und völlig synchron frei. Dieses Mischkopfprinzip ist ebenfalls allgemein bekannt und sowohl in der Patentliteratur als auch in der sonstigen Literatur beschrieben.

Vor Schussbeginn durchströmen die Komponenten jeweils die ihnen zugeordnete Düse und anschließend eine längliche Nut im Steuerstößel, welche den Vorlauf mit dem Rücklauf hydraulisch verbindet. Mit dem Abruf eines Schusses durch die Steuerung wird dieser Steuerstößel dann in der Regel hydraulisch von der Kreislaufposition in die Schussposition gefahren, so dass die Komponenten anschließend nicht mehr in die Nut, sondern in die Mischkammer strömen. Dabei sind für einen kurzen Moment sowohl der Rücklauf als auch der Weg in die Mischkammer versperrt, so dass es zu einem kurzzeitigen Druckanstieg kommt.

Die Höhe dieses Druckanstiegs hängt dabei wesentlich von der Fahrzeit des Steuerschiebers und von der Länge des Bereichs ab, innerhalb der sowohl die Rücklaufnut als auch der Weg in die Mischkammer versperrt sind. Einen großen Einfluss hat aber auch die sogenannte Atmung des Gesamtsystems. Damit ist im Wesentlichen die Ausdehnung der Leitungsquerschnitte in Folge des erhöhten Druckes gemeint, durch welche ein Teil der Menge in dem zusätzlichen Volumen gespeichert wird. Allerdings ist es trügerisch zu meinen, ein möglichst weiches System, d.h. ein möglichst stark atmendes Leitungssystem sei die beste Lösung, da die gespeicherte Menge während des Schusses wieder freigegeben wird, wodurch es zu Kennzahlverschiebungen, d.h. einer Veränderung des Mischungsverhältnisses kommen kann. Der Vorteil eines stark atmenden Systems ist insofern allenfalls darin zu sehen, dass die Gefahr einer Abschaltung der Maschine wegen Überschreiten des Absicherungsdruckes geringer ist.

Dieser Effekt lässt sich auch durch Gleichdruckdüsen (Konstantdruckdüsen) nicht verhindern. Die Gleichdruckdüse reagiert auf den zwangsläufigen Druckanstieg mit einer axialen Verschiebung des Zapfens, und zwar abhängig von den sonstigen Rahmenbedingungen (Schlauchatmung, Mengenstrom, ggf. Federkennlinie bei Einsatz einer Feder) bis zum hinteren Anschlag der Düsennadel.

Um anschließend ein schnelles Einpendeln auf das gewünschte Druckniveau zu ermöglichen ist es vorteilhaft, den hinteren Anschlag für die Düsennadel möglichst optimal auf den Wirkbereich der Düse abzustimmen.

Der Wirkbereich einer Gleichdruckdüse ist dabei im Wesentlichen abhängig von dem Druckniveau und der Düsengröße (d.h. dem Lochdurchmesser der in die Mischkammer mündenden Düsenöffnung). Vereinfacht ausgedrückt verlässt die Düse ihren Wirkbereich als Konstantdruckdüse (Gleichdruckdüse) in dem Moment, in dem die Querschnittsfläche des Düsenloches kleiner wird als die Querschnittsfläche des engsten Ringspaltes. Dies gilt in der Form jedoch nur für niedrige Viskositäten, bei denen der Druckverlust im Wesentlichen nur von der maximalen Geschwindigkeit im Spalt abhängt.

Mit steigenden Viskositäten spielen jedoch, wie schon erwähnt, Reibungsverluste eine größere Rolle, so dass die Querschnittsfläche des Ringspalts auch dann noch erhebliche Auswirkungen auf den Druckverlust hat, wenn die maximalen Geschwindigkeiten im Ringspalt bereits deutlich niedriger sind als die maximalen Geschwindigkeiten im Düsenloch. Die Folge ist, dass der einstellbare Hubbereich bei größeren Viskositäten ggf. größer gewählt werden sollte.

Deshalb ist es sinnvoll, den maximalen Düsenhub $h_{max}$ in Abhängigkeit des Düsen-Innendurchmessers d gemäß der Beziehung $h_{max} = K_{Hub} \cdot d$ zu begrenzen, wobei der Faktor $K_{Hub}$ in einem Bereich zwischen 0,15 bis 1,5, bevorzugt zwischen 0,2 bis 0,8 und besonders bevorzugt zwischen 0,25 und 0,7 liegt. Der Bezugspunkt ist dabei die Düsennadelposition, bei welcher der Düsenzapfen gerade aus dem Düsenloch auftaucht, die sogenannte Nullposition. Bei einem zylindrischen Zapfen ist diese Position folglich nicht identisch mit der Position bei der die Düsennadel metallisch dichtend im Düsenplättchen aufliegt.

Dabei wird mit dem Düsen-Innendurchmesser d der Durchmesser der runden Austrittsöffnung aus der Konstantdruckdüse, die in die Mischkammer mündet, bezeichnet.

Der Vorteil eines kleinen Faktors $K_{Hub}$ besteht darin, dass die Düse sich bei Schussbeginn schneller auf den gewünschten Arbeitsdruck einregelt. Die Wahl eines zu kleinen Faktors $K_{Hub}$ kann jedoch dazu führen, dass der Arbeitsbereich der Düse hinsichtlich des maximalen Volumenstroms eingeschränkt wird.

Für niedrige Viskositäten (kleiner 500 mPas) kann für der Faktor $K_{Hub}$ prinzipiell ein kleinerer Faktor gewählt werden als für hohe Viskositäten, da sich der Wirkbereich des Düsenzapfens bei niedrigen Viskositäten über einen wesentlich kleineren Zapfenhubbereich Δh erstreckt als bei hohen Viskositäten. Wenn der Wert für den Faktor $K_{Hub}$ allerdings zu klein gewählt wird, wird dadurch der Arbeitsbereich der Düse hinsichtlich des maximalen Volumenstroms eingeschränkt.

Ein Problem, insbesondere bei Schussbeginn, ist die Tendenz des Systems in Schwingung zu geraten. Wesentliche Einflussfaktoren auf das Schwingungsverhalten sind die Federsteifigkeit und ggf. die Kompressibilität des Antriebsfluids. Hierbei hat sich gezeigt, dass bezüglich der Schwingungsproblematik eine Kombination aus einer Feder und einem pneumatischen Antriebsfluid die optimale Lösung darstellt.

Die reine Federlösung beinhaltet das Problem, dass eine sehr harte Feder zwar einerseits dazu führt, dass die Feder sehr schnell reagiert und bei einem zu weiten Öffnen der Düse schnell gegensteuert, gleichzeitig aber bereits bei einem geringen Überschwingen bereits eine sehr starke Gegenkraft erzeugt wird, welche das System dann wieder relativ weit in die andere Richtung überschwingen lässt. Es kommt insbesondere bei niederviskosen Medien zu einem relativ starken Schwingen des Systems. Eine weiche Feder wiederum birgt das Problem, dass die Feder erst bei einem relativ weiten Verstellweg stark genug gegensteuert, um die Trägheitskräfte zu überwinden und eine Rückbewegung der Düsennadel zu bewirken. Diese verläuft dann auch deutlich langsamer als bei einer sehr steifen Feder. So kommt es zwar nicht zu einem so ausgeprägten Schwingen wie bei einer harten Feder, aber dennoch dauert es sehr lange bis die Düsennadel ihre richtige Position eingenommen hat und sich dementsprechend der gewünschte Mediendruck exakt eingestellt hat.

Die rein hydraulische Lösung wiederum beinhaltet das Problem, dass es ähnlich wie bei einer sehr harten Feder zu sehr ausgeprägten Druckspitzen kommt. Da die Hydraulikflüssigkeit nur eine sehr geringe Kompressibilität besitzt, führt jede schnelle Düsenbewegung unmittelbar zu einer starken Druckänderung auf der Hydraulikseite, da die hydraulische Flüssigkeit erst etwas verzögert abfließen kann.

Im Gegensatz dazu ist der pneumatisch gesteuerte Faltenbalg ein weiches System mit einer immanenten Dämpfung. Gas ist kompressibel und so käme es selbst bei einem abgeschlossenen System auf der Gasseite nicht zu starken Drucküberhöhungen in Folge einer Bewegung der Düsennadel. Die Druckänderung ist in diesem Fall lediglich umgekehrt proportional zur Volumenänderung im Gasraum. Wenn also das Gasvolumen groß genug ist im Vergleich zur Volumenänderung im Faltenbalg als Folge der Düsenbewegung, verhält sich dieses System ähnlich wie eine weiche Feder. Der wesentliche Vorteil ist jedoch darin zu sehen, dass der Mediendruck über den Pneumatikdruck jederzeit beliebig verstellt werden kann. Außerdem entfällt die aufgrund der Federkennlinie unausweichliche Druckänderung bei Verändern der Düsennadelposition.

Deshalb wird erfindungsgemäß eine Konstantdruckdüse zum Verdüsen einer Polyurethan-Reaktionskomponente in die Mischkammer eines Hochdruckmischkopfes hinein vorgeschlagen, enthaltend

- eine Eintrittsöffnung zur Zufuhr der Reaktionskomponente in die Konstantdruckdüse, wobei die Konstantdruckdüse über die Eintrittsöffnung hydraulisch mit einem Dosieraggregat zum Fördern der Reaktionskomponente verbindbar ist, und

- eine runde Austrittsöffnung aus der Konstantdruckdüse, die in die Mischkammer mündet, und einen Düsen-Innendurchmesser (d) aufweist, und

- ein Düsengehäuse und

- eine innerhalb des Düsengehäuses axial bewegliche und konzentrisch zur der in die Mischkammer mündenden Austrittsöffnung geführte Düsennadel, enthaltend einen Düsenschaft und einen Düsenzapfen, welche in geschlossenem Zustand die Austrittsöffnung zur Mischkammer verschließt und welche in geöffnetem Zustand mit der in die Mischkammer mündenden Austrittsöffnung einen variablen Ringspalt ausbildet, und

- eine mechanische Steuereinheit, enthaltend ein flexibles Steuerelement, das eine einstellbare, im Wesentlichen axiale Kraft auf die Düsennadel erzeugt, sowie eine stirnseitige, der Düsennadel zugewandte Anschlussplatte, wobei

das flexible Steuerelement einen Faltenbalg enthält, welcher mit einem unter einem einstellbaren Druck stehenden Gasraum verbunden ist, so dass die von dem flexiblen Steuerelement auf die Düsennadel wirkende Kraft pneumatisch verstellt werden kann, wobei der Raum, in dem sich das flexible Steuerelement bewegt gegenüber dem mit dem Dosieraggregat hydraulisch verbundenen Raum hydraulisch abgedichtet ist.

Allerdings hat die rein pneumatische Lösung auch noch zwei Nachteile:

- Das System reagiert ähnlich wie eine weiche Feder relativ träge.

- Es gibt keine mechanische Zwangszuhaltung bei ausfallendem oder zu geringem pneumatischem Druck.

- Je nach Dimensionierung der verschiedenen Durchmesser und des Faltenbalges (welche ja, wie oben erläutert verschiedensten Rahmenbedingungen genügen müssen) ist teilweise der vorhandene, übliche Leitungsdruck im Luftversorgungsnetz nicht ausreichend, um die gewünschten Mediendrücke von z.B.

200 bar zu erzeugen.

Deshalb hat sich eine Kombination aus einem Faltenbalg, welcher pneumatisch gesteuert wird und einer Feder als die optimale Lösung erwiesen. Hierbei hat die Feder die Aufgabe, die Düse auch ohne anstehenden Pneumatikdruck unter einer gewissen Vorspannung sicher geschlossen zu halten, wenn kein Mediendruck ansteht. Außerdem kann das System über die Federsteifigkeit bezüglich des Schwingungsverhaltens und der Reaktionszeit besser optimiert werden als dies bei einer rein pneumatischen Lösung möglich ist.

Eine Maßnahme, die sich in mehrfacher Hinsicht sehr vorteilhaft auswirkt, besteht darin, die benötigten Hublängen zu minimieren.

Dies ist dadurch erreichbar, dass sich die Querschnittsfläche des engsten Ringspalts A möglichst schnell mit dem Düsenhub h, d.h. der Hublänge des Zapfens, ändert, d.h. dass die Geometrie der Düse so gewählt wird, dass $\dfrac{\partial A}{\partial h}$ möglichst groß ist.

Es hat sich gezeigt, dass es viele Vorteile bringt, wenn sich die Querschnittsfläche des Ringspaltes A mit dem Düsenhub h im Wirkbereich der Düse gemäß der Ungleichung $\dfrac{\partial A}{\partial h} \geq 1,5 \cdot d$, bevorzugt $\dfrac{\partial A}{\partial h} \geq 2 \cdot d$ und besonders bevorzugt $\dfrac{\partial A}{\partial h} \geq 2,5 \cdot d$ ändert.

Auf diese Weise lässt sich ein maximaler Verstellbereich mit einer Düsengröße bei kleinem Gesamthub erzielen. Besonders vorteilhaft wirkt sich dabei aus, dass gleichzeitig die Effizienz bezüglich der Umsetzung von Druckenergie in Strömungsenergie umso besser wird, je größer $\dfrac{\partial A}{\partial h}$ ist. Dies gilt insbesondere unter den kritischen Bedingungen kleiner Düsen-Innendurchmesser, enger Düsenspalt und hohe Viskosität. Unter diesen Bedingungen werden nämlich die Strömungsverluste im Einlaufbereich zum engsten Düsenspalt besonders groß, wenn $\dfrac{\partial A}{\partial h}$ sehr klein gewählt wird. Somit lässt sich durch diese Maßnahme gerade unter sehr kritischen Bedingungen das Arbeitsfenster einer Düse deutlich erweitern.

Besonders vorteilhaft wirkt sich diese Maßnahme aus, wenn gleichzeitig die äußere Mantelfläche des Düsenzapfens mit der inneren Mantelfläche des Düsenplättchens im Einströmbereich zum engsten Ringspalt einen Winkel von mindestens 30°, bevorzugt mindestens 45° und besonders bevorzugt mindestens 60° ausbildet.

Ebenso ist es wiederum vorteilhaft, wenn die äußere Mantelfläche des Düsenzapfens mit inneren Mantelfläche des Düsenplättchens auch im Ausströmbereich aus dem engsten Ringspalt einen Winkel von mindestens 30°, bevorzugt 45° und besonders bevorzugt 60° ausbildet.

Beim Einsatz von Federn als Antriebselement bringt ein möglichst großer Gradient $\dfrac{\partial A}{\partial h}$ den zusätzlichen Vorteil, dass die Druckerhöhung in Folge einer Mengenänderung geringer wird. Bei einer Mengenerhöhung reagiert die Düse mit einer Vergrößerung des Ringspaltes, also mit einem Zusammendrücken der Feder entsprechend dem durchgeführten Zapfenhub (Düsenhub, Hub des Düsenzapfens). Je größer der benötigte Hub als Reaktion auf diese Mengenänderung wird, umso größer wird die zusätzliche Kraft, welche die Feder erzeugt und umso stärker steigt der Druck in Folge einer Mengenänderung. Wenn also ein geringerer Zapfenhub notwendig ist um den Ringspalt um einen bestimmten Betrag zu vergrößern, so bewirkt dies, dass die Druckerhöhung als Folge einer Mengenänderung geringer ausfällt.

Andererseits könnte man den gerade beschriebenen Effekt auch dazu nutzen, eine steifere Feder einzusetzen. Steifere Federn haben den Vorteil, dass sie ein schnelleres Regelverhalten bewirken. Dies wirkt sich z.B. besonders positiv auf die Druckeinstellzeiten bei Schussbeginn aus.

Weiterhin lässt sich der Gesamthub der Feder stärker begrenzen, was sich ebenfalls wieder günstig auf die Druckeinstellzeit z.B. bei Schussbeginn auswirkt.

Diese Effekte können von großer Bedeutung sein, da die korrekte Dosierung der Reaktivkomponenten erst wieder gewährleistet ist, wenn sich wieder das richtige Druckniveau eingestellt hat.

Von großer Bedeutung ist ein möglichst großer Gradient $\dfrac{\partial A}{\partial h}$ auch im Hinblick auf den Einsatz von Faltenbalgen. Die Dauerfestigkeit von Faltenbalgen hängt dabei bei gegebener Baugröße ganz wesentlich von den Hublängen ab, denen der Balg ausgesetzt wird. Da die Baugröße der Düsen ebenfalls ein wichtiges Kriterium darstellt, ist auch die Baugröße des Antriebselements, also ggf. des Balges begrenzt. Deshalb ist die Begrenzung des Hubes ein ganz wichtiges Kriterium, dass den sinnvollen und dauerhaften Einsatz von Faltenbälgen unter den gegebenen Rahmenbedingungen häufig überhaupt erst möglich macht.

Mit Hinblick auf die Dauerfestigkeit am günstigsten ist dabei eine schwellende Belastung des Faltenbalges. Deshalb ist es sinnvoll, den Faltenbalg so einzubauen, dass die Düse im lastfreien Zustand eine Zwischenlage zwischen ihrem geschlossenen Zustand und dem maximal geöffneten Zustand einnimmt.

Bevorzugt ist auch die Konstantdruckdüse dadurch gekennzeichnet,
dass der Durchmesser des flexiblen Steuerelementes größer ist als der Durchmesser $d_2$ des Düsenschaftes und
dass sich die Querschnittsfläche des Ringspaltes A in Abhängigkeit vom Hub des Düsenzapfens h ändert, wobei der Gradient dieser Änderung $\dfrac{\partial A}{\partial h}$ im wesentlichen Wirkbereich der Düse größer $1,5 \cdot d$, bevorzugt größer $2 \cdot d$ und besonders bevorzugt größer $2,5 \cdot d$ ist, wobei der wesentliche Wirkbereich dadurch definiert ist, dass die Querschnittsfläche des engsten Ringspaltquerschnitts A in diesem Bereich durch die mathematische Beziehung $0,1 \cdot \dfrac{\pi}{4} d^2 \leq A \leq 2 \cdot \dfrac{\pi}{4} d^2$ definiert ist.

Hochdruckmischköpfe sind die in der Polyurethan-Herstellung üblicherweise eingesetzten Mischköpfe, in denen die Polyurethan-Reaktivkomponenten Polyol und Isocyanat bei absoluten Drücken von wenigstens 30 bar mittels Düsen in eine Mischkammer injiziert und dort vermischt werden.

Als flexibles Steuerelement werden Faltenbälge oder Kombinationen aus Faltenbälge und Druckfedern eingesetzt.

Da es sich dabei jedoch um hoch dynamische Vorgänge handelt, ist es wichtig, dass der Düsenzapfen auf kleine Druckänderungen schnell reagieren kann und möglichst leichtgängig verschiebbar ist. In diesem Zusammenhang ist es somit wichtig, dass möglichst geringe Querkräfte auf die beweglichen Bauteile in der Konstantdruckdüse wirken, da ansonsten die Gefahr des sogenannten Slip-Stick-Effektes besteht. Dieser Effekt tritt auf, wenn die Reibkräfte, welche auf die Düse wirken, größer werden, als die "Verstellkräfte", so dass es zu einem Hakeln der Düse kommen kann.

Die Querkräfte, welche auf die beweglichen Bauteile wirken, lassen sich konstruktiv beeinflussen. Einerseits sollte vermieden werden, dass das Antriebselement (z.B. Faltenbalg mit Feder oder Faltenbalg) durch radiales Auslenken mit dem Düsengehäuse oder anderen Baugruppen in Berührung kommen. Das Antriebselement sollte deshalb radial frei ausweichen können und nicht geführt werden. Ansonsten können die entstehenden Reibkräfte schnell zu dem nachteiligen Slip-Stick-Effekt führen.

Ein übermäßiges radiales Auslenken oder gar Knicken sollte konstruktionsbedingt unter den gegebenen Rahmenbedingungen lediglich durch die aus einem radialen Ausweichen resultierenden Biege- oder Torsionsmomente im flexiblen Steuerelement selbst im Zusammenspiel mit einer geeigneten Anbindung an das Gehäuse auf der der Düsennadel abgewandten Stirnseite sowie einer geeigneten Anbindung an die bewegliche Düsennadel an der dem Düsenschaft zugewandten Stirnseite vermieden werden.

Dabei hat sich eine Momenten-freie Kraftübertragung zwischen der axial beweglichen Düsennadel und dem flexiblen Steuerelement als sehr vorteilhaft erwiesen. Diese lässt sich z.B. durch eine sphärische Lagerung erzielen, bei der die dem axial beweglichen Düsenschaft zugewandte Stirnseite des Federsystems bzw. einer mit diesem verbundenen Anschlussplatte frei drehbar gelagert ist. Dies lässt sich z.B. dadurch realisieren, dass der Düsenschaft an seinem dem Federsystem zugewandten Ende kugelförmig ausgebildet ist und der untere Federteller auf der dem Düsenschaft zugewandten Seite eine zur Kugelkalotte des Düsenschafts passende konkave Höhlung aufweist, die formschlüssig die Kugelkalotte des Düsenschafts so umfasst, dass das Federsystem an der dem Düsenschaft zugewandet Seite zentrisch zum Düsenschaft fixiert ist.

Bevorzugt ist daher auch die Konstantdruckdüse dadurch gekennzeichnet, dass
das flexible Steuerelement nicht axial geführt wird, und dass die der Düsennadel zugewandte Stirnseite der Steuereinheit sphärisch zum Düsennadel gelagert ist, wobei der Mittelpunkt der sphärischen Lagerung auf der Mittelachse der beweglichen Düsennadel liegt, so dass die Auflagefläche der Steuereinheit frei drehbar um diesen Mittelpunkt angeordnet ist.

Dadurch dass das flexible Steuerelement nicht axial geführt wird, wird bewirkt, dass ein übermäßiges radiales Durchbiegen bzw. Knicken unter Krafteinwirkung nur durch seine Eigensteifigkeit verhindert wird, wobei dann keine zusätzlichen axialen, der Bewegung entgegenwirkenden Kräfte, entstehen.

Auch hierbei werden als flexibles Steuerelement Faltenbalge oder Kombinationen aus Faltenbalge und Druckfedern eingesetzt.

Diese spezielle Ausführungsform bewirkt nicht nur, dass die Kraftübertragung von dem bevorzugt eingesetzten Federsystem auf den Düsenschaft Momentfrei ist, sie bewirkt auch, dass das gesamte Federsystem exakt zur Düsennadel fluchtet und somit nahezu keine Querkräfte auf die Düsennadel übertragen werden, eine exakte Fertigung allerdings vorausgesetzt.

Wenn dennoch durch Fertigungstoleranzen eine minimale Querkraft vom Federsystem auf die Düsennadel übertragen wird, so ist jedoch ein Klemmen der Düsennadel ausgeschlossen, wenn das $L/d_2$-Verhältnis der Düsennadelführung 2 bis 6, bevorzugt 2,5 bis 4 beträgt. $L/d_2$ gegen 6 gehend erhöht die Baulänge der gesamten Düse. $L/d_2$ gegen 2 gehend erhöht die Reibkraft. Der optimale Kompromiss liegt bei 2,5 bis 4.

In der Ausgestaltung dieser Konstantdruckdüse ist der Raum, in dem sich das flexible Steuerelement bewegt, gegenüber dem mit dem Dosieraggregat hydraulisch verbundenen Raum hydraulisch abgedichtet.

Dadurch ist es nämlich erst möglich, den benötigten Steuerdruck unabhängig vom Mediendruck zu wählen. Nur durch diese Maßnahme lassen sich somit die entstehenden Spannungen im eingesetzten Faltenbalg, welche sich natürlich direkt auf seine Dauerfestigkeit auswirken, dadurch reduzieren, dass die Fläche, über die das hydraulische oder pneumatische Steuermedium seine Kraft auf den Faltenbalg und schließlich über die sphärische Lagerung auf den Düsenschaft ausübt, größer gewählt wird, als die Fläche, über die der Mediendruck seine Kraft auf den Düsenschaft ausübt. Umgekehrt proportional zum Flächenverhältnis der entsprechenden Wirkflächen kann dann der Steuerdruck im Verhältnis zum Mediendruck reduziert werden.

Ein wichtiges Kriterium stellt auch die Baugröße einer Düse dar. Da die Mischköpfe häufig mittels Robotern in begrenzten Räumen bewegt werden müssen, ist es vorteilhaft, wenn der Mischkopf inklusive der Düsen möglichst klein bauend ausgeführt ist.

Dabei wird der Bauraum einer Konstantdruckdüse im Wesentlichen von der Größe der Antriebseinheit bestimmt.

Generell kann die Antriebseinheit bzw. das Federsystem der Düse (Konstantdruckdüse) umso kleiner gebaut werden, je kleiner die benötigten axialen Kräfte sind, die benötigt werden, um dem Mediendruck entgegen zu wirken. Da diese Kräfte proportional zum Druckniveau sowie zur Wirkfläche dieses Druckniveaus auf den Düsenschaft sind, ist es vorteilhaft, den Durchmesser des beweglichen Düsenschafts möglichst klein auszuführen. Entscheidend ist dabei der Durchmesser, auf dem der mediengefüllte (und damit unter dem Mediendruck stehende Raum) und der Federraum, in dem das Federsystem arbeitet, mittels einer Dichtung hydraulisch dichtend voneinander getrennt werden. In der Regel entspricht dieser Durchmesser dem Durchmesser des beweglichen Düsenschafts.

Gleichzeitig benötigt das flexible und radial über seine Länge nicht geführte Federsystem eine ausreichende Eigensteifigkeit, damit es nicht übermäßig radial auslenken bzw. knicken kann.

Deshalb sollte der äußere Durchmesser des Federsystems mindestens um den Faktor 1,5 und bevorzugt um den Faktor 2 größer sein als der Durchmesser des Düsenschaftes.

Beim Einsatz von Faltenbalgen als flexibles Antriebselement (Steuerelement) bringt diese Maßnahme den zusätzlichen Vorteil, dass der Druck des eingesetzten Steuermediums (z.B. Hydrauliköl oder Luft) im Verhältnis zum Mediendruck deutlich gesenkt werden kann. Für eine pneumatische Steuerung ist es besonders vorteilhaft, wenn der Balgdurchmesser D um einen Faktor von mindestens 3, bevorzugt mindestens 4 größer ist als der Durchmesser $d_2$ des Düsenschafts, da dann häufig das vorhandene Druckluftnetz ausreicht, um die benötigte Gegenkraft bei ca. 100 bar bis 200 bar Mediendruck zu erzeugen.

Gleichzeitig sollte der äußere Durchmesser D des Federsystems natürlich auch nicht zu groß gewählt werden, da dies den benötigten Bauraum entsprechend vergrößert. Deshalb wird vorgeschlagen, dass der äußere Durchmesser des Federsystems maximal um den Faktor 5 größer gewählt wird als der Durchmesser des Düsenschaftes.

Beim Einsatz von Druckfedern zu diesem Zweck muss die Feder einerseits Mediendrücken von 200 bar entgegenwirken, und gleichzeitig sollte die Feder weich genug sein, dass sich die Federkraft über ihren Verstellbereich nicht zu stark ändert, da sich dies direkt in einer Druckdifferenz auf der Medienseite niederschlägt.

Generell kann das Federsystem der Düse umso kleiner gebaut werden, je kleiner die axialen Kräfte sind, die benötigt werden, um dem Mediendruck entgegen zu wirken. Da diese Kräfte proportional zum Druckniveau sowie zur Wirkfläche dieses Druckniveaus auf den Düsenschaft sind, ist es vorteilhaft den Durchmesser $d_2$ des Düsenschafts zu minimieren.

Da über den Düsenschaft auch abgedichtet wird, bewirkt ein kleiner Düsenschaftdurchmesser ($d_2$) den zusätzlichen Vorteil, dass die Reibkraft der Dichtung klein bleibt. Wie oben erläutert, ist diese proportional zum benötigten Anpressdruck der Dichtung und zur Kontaktfläche.

Gleichzeitig darf jedoch die Wirkfläche bei geschlossener Düse nicht zu klein werden im Vergleich zur Wirkfläche bei geöffneter Düse. Ansonsten kann dies dazu führen, dass das benötigte Druckniveau zum Öffnen der Düse deutlich über dem Druckniveau im geregelten Betrieb liegt. Deshalb sollte der Schaftdurchmesser ($d_2$) mindestens doppelt, bevorzugt 2,5 Mal so groß sein wie der Düsen-Innendurchmesser d.

Es wurde gefunden, dass das Gesamtsystem überraschender Weise in recht einfacher Weise optimiert werden kann, indem eine Feder mit einer Federsteifigkeit gemäß der Gleichung $c = K \cdot d$ gewählt wird, wobei die Konstante K einen Wert zwischen 20 und 200 N/mm$^2$, bevorzugt zwischen 30 und 180 N/mm$^2$ und besonders bevorzugt zwischen 40 und 150 N/mm$^2$ hat. Dabei gilt prinzipiell, dass für niedrige Viskositäten (<1000mPas) eher härtere Federn mit einer Konstanten K zwischen 50 N/mm$^2$ und 200 N/mm$^2$, bevorzugt zwischen 75 und 200 N/mm$^2$ eingesetzt werden, während für höhere Viskositäten (>1000 mPas) eher weichere Federn mit einer Konstanten K zwischen 20 bis 120 N/m$^2$ und bevorzugt zwischen 20 und 100 N/mm$^2$ eingesetzt werden, da sich der Wirkbereich des Zapfens bei hohen Viskositäten über einen wesentlich größeren Hubbereich erstreckt.

Gegenstand der Erfindung ist außerdem ein Verfahren zum Vermischen von mindestens zwei Reaktivkomponenten, wobei die mindestens zwei Reaktivkomponenten über Düsen in eine Mischkammer injiziert werden und sich dort aufgrund ihrer kinetischen Energie miteinander vermischen, dadurch gekennzeichnet, dass mindestens eine der Reaktivkomponenten mittels einer erfindungsgemäßen Konstantdruckdüse in die Mischkammer gedüst wird.

Bevorzugt ist die Konstantdruckdüse noch dadurch gekennzeichnet, dass die Düsennadel einen zylindrischen Zapfen mit einer Länge von $0,3 \cdot d$ bis $1,5 \cdot d$, bevorzugt von $0,4 \cdot d$ bis $1,2 \cdot d$ und besonders bevorzugt von $0,4 \cdot d$ bis $1,0 \cdot d$ hat.

Die Erfindung wird nach nachstehend anhand der Figuren beispielhaft erläutert:

> Figur 1 zeigt eine Konstantdruckdüse mit Faltenbalg als flexiblem Steuerelement.

> Figur 2 zeigt eine nicht erfindungsgemäße Konstantdruckdüse mit Druckfeder als flexiblem Steuerelement.

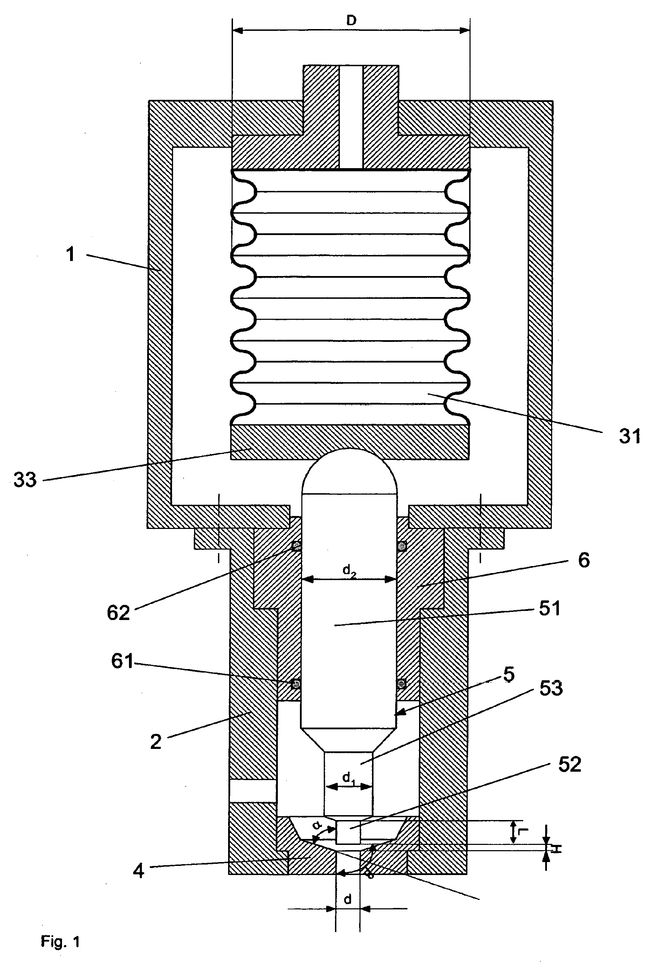

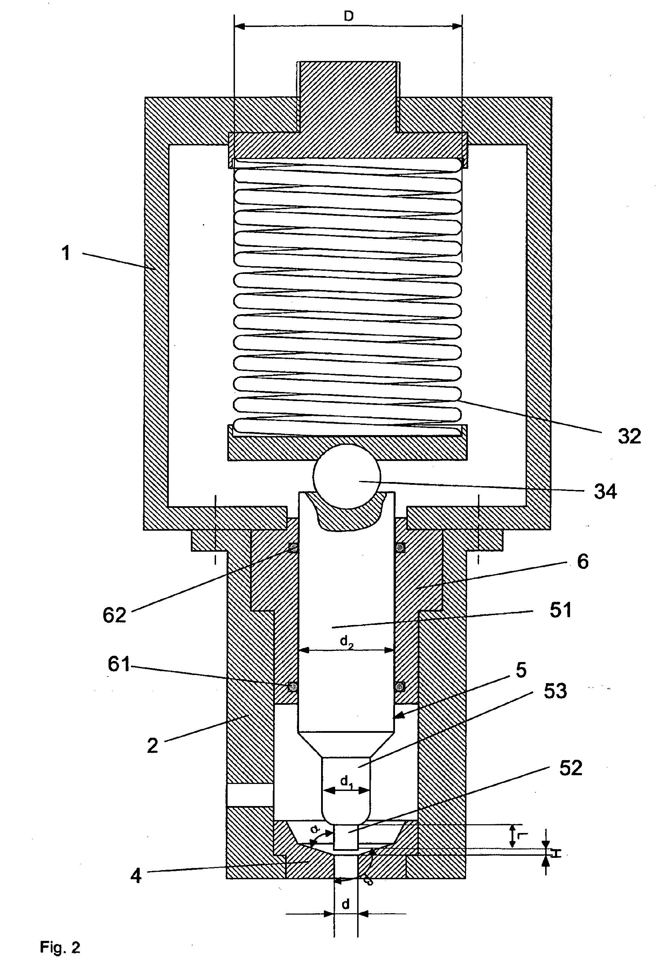

Figur 1 und Figur 2 zeigen zwei unterschiedliche Ausführungsformen einer Konstantdruckdüse. Diese besteht im Wesentlichen aus einem zweiteiligem Gehäuse, enthaltend ein erstes oder oberes Gehäuseteil 1 und ein zweites oder unteres Gehäuseteil 2, der mechanischen Steuereinheit 31, 32, dem Düsenplättchen 4 und der Düsennadel 5, welche wiederum in einer Kapsel 6 geführt wird, die wiederum im zweiten oder unteren Gehäuseteil 2 eingebaut ist. Theoretisch könnte die Düsennadel 5 auch direkt im Gehäuse 2 geführt werden.

Die Düsennadel 5 besteht im Wesentlichen aus dem Düsenschaft 51 und dem Düsenzapfen 52, welche konzentrisch zueinander angeordnet sind. In der Regel ist zwischen dem zylindrischen Düsenschaft und dem Düsenzapfen ein weiterer abgesetzter zylindrischer Bereich 53 vorhanden, dessen vorderes Ende als metallische Dichtfläche fungiert. Das Verhältnis des Durchmessers $d_1$ zum Schaftdurchmesser $d_2$ ist entscheidend dafür, wie groß die Drucküberhöhung beim Öffnen ist, da der Druck zunächst nur auf die Differenz der beiden den Durchmessern zugehörige Flächen wirkt.

Der Düsenschaft 51 und folglich die gesamte Düsennadel 5 werden in einer Kapsel 6 axial geführt. Im Bereich dieser Führung ist eine doppelte Dichtung 61, 62 eingebaut, welche vorteilhafter Weise möglichst reibungsarm ausgeführt wird. Der Düsenzapfen 52 befindet sich an der dem Düsenplättchen 4 zugewandten Seite, so dass er mit diesem einen variablen Ringspalt ausbildet, dessen Querschnittsfläche sich je nach der axialen Position der Düsennadel 5 ändert. An der dem Düsenplättchen 4 abgewandten Seite ist der Düsenschaft 51 kugelförmig ausgebildet.

Die mechanische Steuereinheit besteht in Figur 1 aus einem Faltenbalg 31 mit einer Zuströmöffnung 33 für das Steuermedium (z.B. Öl oder Luft) auf der der Düsennadel 5 abgewandten Seite. An der der Düsennadel 5 zugewandten Seite des Faltenbalgs 31 befindet sich eine Anschlussplatte, welche auf der dem Düsenschaft 51 zugewandten Seite eine zur Kugelkalotte des Düsenschafts 51 passende konkave Höhlung aufweist, die formschlüssig die Kugelkalotte des Düsenschafts 51 so umfasst, dass das Federsystem an der dem Düsenschaft zugewandten Seite zentrisch zum Düsenschaft 51 fixiert ist.

Figur 2 zeigt eine Variante einer nicht erfindungsgemäßen Düse mit einer Druckfeder 32 als flexiblem Steuerelement. Des weiteren erfolgt die Kraftübertragung der Druckfeder 32 auf den Düsenschaft in diesem Fall über eine separate Kugel 34.

**Patentansprüche**

1. Konstantdruckdüse zum Verdüsen einer Polyurethan-Reaktionskomponente in die Mischkammer eines Hochdruckmischkopfes hinein, enthaltend

   - eine Eintrittsöffnung zur Zufuhr der Reaktionskomponente in die Konstantdruckdüse, wobei die Konstantdruckdüse über die Eintrittsöffnung hydraulisch mit einem Dosieraggregat zum Fördern der Reaktionskomponente verbindbar ist, und
   - eine runde Austrittsöffnung aus der Konstantdruckdüse, die in die Mischkammer mündet, und einen Düsen-Innendurchmesser d aufweist, und
   - ein Düsengehäuse (1, 2) und
   - eine innerhalb des Düsengehäuses (1, 2) axial bewegliche und konzentrisch zur in die Mischkammer mündenden Austrittsöffnung geführte Düsennadel (5), enthaltend einen Düsenschaft (51) und einen Düsenzapfen (52), welche in geschlossenem Zustand die Austrittsöffnung zur Mischkammer verschließt und welche in geöffnetem Zustand mit der in die Mischkammer mündenden Austrittsöffnung einen variablen Ringspalt ausbildet, und
   - eine mechanische Steuereinheit, enthaltend ein flexibles Steuerelement (31, 32), das eine einstellbare, im Wesentlichen axiale Kraft auf die Düsennadel (5) erzeugt, wobei

   das flexible Steuerelement (31, 32) einen Faltenbalg enthält, welcher mit einem unter einem einstellbaren Druck stehenden Gasraum verbunden ist, so dass die von dem flexiblen Steuerelement auf die Düsennadel wirkende Kraft pneumatisch verstellt werden kann, **dadurch gekennzeichnet, dass** der Raum, in dem sich das flexible Steuerelement bewegt, gegenüber dem mit dem Dosieraggregat hydraulisch verbundenen Raum hydraulisch abgedichtet ist.

2. Konstantdruckdüse gemäß Anspruch 1, **dadurch gekennzeichnet, dass** das flexible Steuerelement zusätzlich eine Druckfeder enthält.

3. Konstantdruckdüse gemäß Anspruch 1 oder 2, **dadurch gekennzeichnet, dass** das flexible Steuerelement (31, 32) nicht axial geführt wird, und dass die der Düsennadel zugewandte Stirnseite der Steuereinheit sphärisch zur Düsennadel gelagert ist, wobei der Mittelpunkt der sphärischen Lagerung auf der Mittelachse der beweglichen Düsennadel liegt, so dass die Auflagefläche der Steuereinheit frei drehbar um diesen Mittelpunkt angeordnet ist.

4. Konstantdruckdüse nach einem der Ansprüche 1 bis 3, **dadurch gekennzeichnet, dass** der Durchmesser des flexiblen Steuerelementes größer ist als der Durchmesser $d_2$ des Düsenschaftes und dass sich die Querschnittsfläche des Ringspaltes A in Abhängigkeit vom Hub des Düsenzapfens h ändert, wobei der Gradient dieser Änderung $\dfrac{\partial A}{\partial h}$ im wesentlichen Wirkbereich der Düse größer 1,5·$d$, bevorzugt größer 2·$d$ und besonders bevorzugt größer 2,5·$d$ ist, wobei der wesentliche Wirkbereich dadurch definiert ist, dass die Querschnittsfläche des engsten Ringspaltquerschnitts A in diesem Bereich durch die mathematische Beziehung

$$0{,}1 \cdot \frac{\pi}{4} d^2 \leq A \leq 2 \cdot \frac{\pi}{4} d^2$$ definiert ist.

5. Konstantdruckdüse gemäß einem der Ansprüche 1 bis 4, **dadurch gekennzeichnet, dass** der Durchmesser des Düsenschafts mindestens doppelt, bevorzugt mindestens 2,5 mal so groß ist wie der Düsen-Innendurchmesser d.

6. Konstantdruckdüse nach einem der Ansprüche 1 bis 5, **dadurch gekennzeichnet, dass** der Durchmesser D des Faltenbalges mindestens um den Faktor 3, bevorzugt um den Faktor 4 größer ist als der Durchmesser $d_2$ des Düsenschafts.

7. Konstantdruckdüse gemäß einem der Ansprüche 1 bis 6, **dadurch gekennzeichnet, dass** der maximale Düsenhub $h_{max}$ in Abhängigkeit vom Düsen-Innendurchmesser d gemäß der Beziehung $h_{max} = K_{Hub} \cdot d$ begrenzt wird, wobei der Faktor $K_{Hub}$ in einem Bereich zwischen 0,15 und 1.5 liegt.

8. Konstantdruckdüse gemäß einem der Ansprüche 1 bis 7, **dadurch gekennzeichnet, dass** der Faltenbalg im lastfreien Zustand eine Zwischenlage zwischen dem geschlossenen Zustand und dem maximal geöffneten Zustand einnimmt.

9. Konstantdruckdüse gemäß einem der Ansprüche 1 bis 8, **dadurch gekennzeichnet, dass** die Düsennadel einen zylindrischen Zapfen mit einer Länge von 0,3·$d$ bis 1,5·$d$ hat.

10. Verfahren zum Vermischen von mindestens zwei Reaktivkomponenten, wobei die mindestens zwei Reaktivkomponenten über Düsen in eine Mischkammer injiziert werden und sich dort miteinander vermischen, **dadurch gekennzeichnet, dass** mindestens eine der Reaktivkomponenten mittels einer Konstantdruckdüse gemäß einem der Ansprüche 1 bis 9 in die Mischkammer eingedüst wird.

## Claims

1. Constant pressure nozzle for atomizing of a polyurethane reactive component into the mixing chamber of a high pressure mixing head, comprising

    - an entry opening for feeding of the reactive component into the constant pressure nozzle, wherein the constant pressure nozzle is connectable with a metering device for conveying of the reactive component hydraulically via the entry opening and
    - a circular discharge opening from the constant pressure nozzle which ends into the mixing chamber and which has an nozzle inner diameter d and
    - a nozzle housing (1, 2) and
    - a nozzle needle (5) which is axially movable within the nozzle housing (1, 2) and which is guided concentrically to the discharge opening which ends into the mixing chamber, comprising a nozzle shaft (51) and a nozzle journal (52), which closes the discharge opening to the mixing chamber in the closed state and which forms a variable annular gap with the discharge opening which ends into the mixing chamber in the open state and
    - a mechanical control unit, comprising a flexible controlling element (31, 32) which creates an adjustable and substantially axial force onto the nozzle needle (5),

    wherein the flexible controlling element (31, 32) comprises bellows, which is connected with a gas chamber which is under an adjustable pressure so that the force can be adjusted pneumatically which acts from the flexible controlling element onto the nozzle needle,
    **characterized in that**
    the chamber in which the flexible controlling element is moving is hydraulically sealed against the chamber which is hydraulically connected with the metering device.

2. Constant pressure nozzle according to claim 1, **characterized in that** the flexible controlling element comprises additionally a pressure spring.

3. Constant pressure nozzle according to claim 1 or 2, **characterized in that** the flexible controlling element (31, 32) is not axially guided and that the face side of the control unit which is facing the nozzle needle is supported spherically to the nozzle needle, wherein the center of the spherical bearing is arranged on the center axis of the movable nozzle needle so that the supporting area of the control unit is freely rotatable around this center.

4. Constant pressure nozzle according to one of claims 1 to 3, **characterized in that** the diameter of the flexible controlling element is bigger than the diameter $d_2$ of the nozzle shaft and that the cross sectional area of the annular gap A changes in dependence of the stroke of the nozzle journal h, wherein the gradient of this change $\dfrac{\partial A}{\partial h}$ in the substantial effective range of the nozzle is bigger than $1.5 \cdot d$, preferably bigger than $2 \cdot d$ and specifically preferred bigger than $2.5 \cdot d$, wherein the substantial effective range is defined **in that** the cross sectional area of the tightest annular gap cross section A in this region is defined by the mathematical relation

$$0.1 \cdot \frac{\pi}{4} d^2 \le A \le 2 \cdot \frac{\pi}{4} d^2 \,.$$

5. Constant pressure nozzle according to one of claims 1 to 4, **characterized in that** the diameter of the nozzle journal is at least twice as big as the nozzle inner diameter d, preferably at least 2.5 times as big.

6. Constant pressure nozzle according to one of claims 1 to 5, **characterized in that** the diameter D of the bellows is at least by the factor 3, preferably by the factor 4, bigger than the diameter $d_2$ of the nozzle journal.

7. Constant pressure nozzle according to one of claims 1 to 6, **characterized in that** the maximal nozzle stroke $h_{max}$ is limited in dependence of the nozzle inner diameter d according to the relation $h_{max} = K_{Hub} \cdot d$, wherein the factor $K_{Hub}$ is in the region between 0.15 and 1.5.

8. Constant pressure nozzle according to one of claims 1 to 7, **characterized in that** the bellows takes an intermediate position between the closed state and the maximal opened state in a load-free state.

9. Constant pressure nozzle according to one of claims 1 to 8, **characterized in that** the nozzle needle has a cylindrical journal with a length from $0.3 \cdot d$ to $1.5 \cdot d$.

10. Method for mixing of at least two reactive components, wherein the at least two reactive components are injected via nozzles into a mixing chamber and are mixing with another there, **characterized in that** at least one of the reactive components are injected into the mixing chamber by means of a constant pressure nozzle according to one of claims 1 to 9.

## Revendications

1. Buse de pression constante destinée à la vaporisation d'un composant réactionnel à base de polyuréthane dans la chambre de mélange d'une tête de mélange haute pression, contenant

   - une ouverture d'entrée pour l'alimentation du composant réactionnel dans la buse de pression constante, la buse de pression constante pouvant être connectée hydrauliquement par le biais de l'ouverture d'entrée à une unité de dosage pour refouler le composant réactionnel, et
   - une ouverture circulaire de sortie hors de la buse de pression constante, laquelle débouche dans la chambre de mélange et présente un diamètre intérieur de buse d, et
   - un boîtier de buse (1, 2) et
   - un pointeau de buse (5) déplaçable axialement à l'intérieur du boîtier de buse (1, 2) et guidé concentriquement par rapport à l'ouverture de sortie débouchant dans la chambre de mélange, lequel pointeau de buse contient une tige de buse (51) et un tourillon de buse (52), qui, dans l'état fermé, ferme l'ouverture de sortie vers la chambre de mélange et qui, dans l'état ouvert, constitue avec l'ouverture de sortie débouchant dans la chambre de mélange un interstice annulaire variable, et
   - une unité de commande mécanique contenant un élément de commande flexible (31, 32) qui génère une force ajustable, essentiellement axiale, sur le pointeau de buse (5),

   l'élément de commande flexible (31, 32) contenant un soufflet qui est connecté à un espace de gaz soumis à une pression ajustable, de telle sorte que la force agissant par le biais de l'élément de commande flexible sur le pointeau de buse puisse être réglée pneumatiquement, **caractérisée en ce que** l'espace dans lequel se déplace l'élément de commande flexible est étanchéifié hydrauliquement par rapport à l'espace connecté hydrauliquement à l'unité de dosage.

2. Buse de pression constante selon la revendication 1, **caractérisée en ce que** l'élément de commande flexible contient en outre un ressort de pression.

**3.** Buse de pression constante selon la revendication 1 ou 2, **caractérisée en ce que** l'élément de commande flexible (31, 32) n'est pas guidé axialement, et **en ce que** le côté frontal de l'unité de commande tourné vers le pointeau de buse est supporté sphériquement par rapport au pointeau de buse, le centre du support sur palier sphérique étant situé sur l'axe médian du pointeau de buse mobile, de telle sorte que la surface d'appui de l'unité de commande soit disposée de manière à pouvoir tourner librement autour de ce centre.

**4.** Buse de pression constante selon l'une quelconque des revendications 1 à 3, **caractérisée en ce que** le diamètre de l'élément de commande flexible est supérieur au diamètre $d_2$ de la tige de buse et **en ce que** la surface en section transversale de l'interstice annulaire A varie en fonction de la course du tourillon de buse h, le gradient de cette variation $\delta A/\delta h$ dans la région d'action principale de la buse étant supérieur à 1,5 * d, de préférence supérieur à 2 * d, et de manière particulièrement préférée à 2,5 * d, la région d'action principale étant définie **en ce que** la surface en section transversale de la section transversale d'interstice annulaire la plus étroite A dans cette région est définie par la relation mathématique $0,1 * \pi/4 * d^2 \leq A \leq 2 * \pi/4 * d^2$.

**5.** Buse de pression constante selon l'une quelconque des revendications 1 à 4, **caractérisée en ce que** le diamètre de la tige de buse est au moins deux fois plus grand, de préférence au moins 2,5 fois plus grand que le diamètre intérieur de la buse d.

**6.** Buse de pression constante selon l'une quelconque des revendications 1 à 5, **caractérisée en ce que** le diamètre D du soufflet est supérieur au diamètre $d_2$ de la tige de buse d'au moins un facteur 3, de préférence d'un facteur 4.

**7.** Buse de pression constante selon l'une quelconque des revendications 1 à 6, **caractérisée en ce que** la course maximale de la buse $h_{max}$ est limitée en fonction du diamètre intérieur de la buse d par la relation $h_{max} = K_{Hub} * d$, le facteur $K_{Hub}$ étant compris dans une plage de 0,15 à 1,5.

**8.** Buse de pression constante selon l'une quelconque des revendications 1 à 7, **caractérisée en ce que** le soufflet, dans l'état sans charge, adopte une position intermédiaire entre l'état fermé et l'état ouvert au maximum.

**9.** Buse de pression constante selon l'une quelconque des revendications 1 à 8, **caractérisée en ce que** le pointeau de buse présente un tourillon cylindrique ayant une longueur de 0,3 * d à 1,5 * d.

**10.** Procédé de mélange d'au moins deux composants réactionnels, les au moins deux composants réactionnels étant injectés par le biais de buses dans une chambre de mélange et s'y mélangeant l'un à l'autre, **caractérisé en ce qu'**au moins l'un des composants réactionnels est injecté dans la chambre de mélange au moyen d'une buse de pression constante selon l'une quelconque des revendications 1 à 9.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2360154 A
- DE 3200802 A
- DE 10020157 A